# EUROPEAN PATENT SPECIFICATION

(11) **EP 1 384 337 B1**
(45) Date of publication and mention of the grant of the patent: **02.03.2011**
(21) Application number: 02731658.7
(22) Date of filing: 02.05.2002
(51) Int. Cl.: H04B 7/185

(54) **TRANSMITTING FORWARD LINK ASSIGNMENTS TO A MOBILE PLATFORM**
ÜBERTRAGUNG DER VORWÄRTSVERBINDUNGSZUWEISUNG AN EINE MOBILE PLATTFORM
TRANSMISSION DES AFFECTATIONS DE LIAISON AVAL A UNE PLATE-FORME MOBILE

(30) Priority: 02.05.2001 US 847450
(43) Date of publication of application: 28.01.2004
(73) Proprietor: The Boeing Company, Chicago, IL 60606-2016 (US)
(72) Inventor: PARKMAN, David, S., Mercer Island, WA 98040 (US)
(74) Representative: Land, Addick Adrianus Gosling
(86) International application number: PCT/US2002/014123
(87) International publication number: WO 2002/089360

(56) References cited:
- US-A- 5 649 318
- US-B1- 6 201 797
- US-B1- 6 208 307

## Description

The present invention relates generally to bi-directional satellite communication systems and more particularly to methods of transmitting forward link transponder assignments to mobile platforms.

In bi-directional communications systems of the related art, a ground station transmits and receives signals to and from a satellite, and the satellite, in turn, transmits and receives signals to and from a mobile platform. Typically, a plurality of satellites are present that cover particular geographic regions, and each satellite further includes a plurality of transponders that receive data from the ground station and subsequently transmit data to the mobile platform. In addition, the mobile platform includes receive and transmit antennas, which are used to communicate with the satellite transponders.

A communications system as described above is known from United States Patent US 6,201,797 B1. A communications system is disclosed in which a request for data is transmitted by an airborne transmitter over a low-bandwidth air-to-ground communications system uplink and received by a ground-based receiver. The requested data is then transmitted over a high-bandwidth communications system downlink, and received by an airborne receiver located on the same aircraft as the airborne transmitter.

In order for the mobile platform to know which satellite transponders to communicate with, a series of forward link transponder assignments are either stored in receiver equipment on-board the mobile platform or transmitted to the mobile platform from the ground station. Generally, different transponders are used to transmit different types of services, i.e. video, audio, Internet, and others, and thus different forward link transponder assignments may be required for a mobile platform to receive the required data. Once the transponder assignments are known, the mobile platform then tunes its receivers to the correct transponder(s) according to the assignments, wherein a plurality of transponders may be tuned if a variety of data types are required by the mobile platform.

If the receiver equipment of the mobile platform fails, however, the mobile platform will lose its forward link transponder assignments and will not know which transponders to which its receivers must be tuned. As a result, the mobile platform loses its link with the specific satellite transponders, and further communications are disabled until the receiver equipment can be repaired or replaced.

Although a failure of the receiver equipment to link to a transponder results in a loss of data transmission, not all data transmissions are necessarily interrupted. Only the specific data or service type transmitted by the unlinked transponder is unavailable while other data types remain linked and available if the forward link assignments remain operational. However, while this data loss may only be partial, the overall effect on the mobile platform may be significant if one data or service type is dependent upon another, e.g. video and audio.

When a failure occurs in known art communications systems, the receiver equipment of the mobile platform is typically removed and replaced by maintenance personnel. Because the receiver equipment does not know the forward link transponder assignments for the specific mobile platform onto which it is installed, maintenance personnel may manually load the assignments during repair procedures. The manual loading of forward link transponder assignments requires additional manual operations and therefore increases aircraft downtime and maintenance costs. Moreover, the aircraft is generally on the ground during receiver equipment maintenance, and as a result, data communications from satellite transponders to the mobile platform are interrupted for the duration of the flight after which transponder links were lost.

Accordingly, there remains a need in the art for a communications system that can provide forward link transponder assignments to a mobile platform without the manual operations associated with receiver equipment maintenance, and which can provide the assignments during continued operation of the mobile platform.

In one preferred form, the present invention provides a communications system and method that transmits forward link transponder assignments from a ground station to a mobile platform, such as an aircraft, through the novel use of a default transponder assignment table. The default transponder assignment table is loaded onto receiver equipment of the mobile platform and contains assignments to a plurality of transponders on a plurality of satellites around the world. If the mobile platform receiver equipment fails and the current forward link transponder assignments are lost, the receiver equipment reverts to the default transponder assignment table to receive a temporary transponder assignment. Although the temporary transponder assignment is incorrect for the specific mobile platform, the transponder that is subsequently linked sends a required return link to the receiver equipment so that the receiver equipment can in turn contact the ground station for the correct forward link transponder assignments.

As set forth, the communications system of the present invention requires that the mobile platform have a return link to a ground station before the correct forward link transponder assignments can be transmitted. The return link is required so that the ground station can confirm any changes in data types required by the mobile platform. Additionally, the ground station comprises a prioritized list of all transponders on all satellites for all regions around the world. The prioritized list is then utilized by the mobile platform to tune its receivers to the highest priority transponders for subsequent data communications.

In another preferred form, the present invention provides a communications system and method that provides forward link transponder assignments from a piece of communications equipment to a piece of receiver equipment on the mobile platform in the event of receiver equipment failure. Initially, the correct forward link transponder assignments for the mobile platform are mirrored onto the piece of communications equipment on the same mobile platform. When a piece of receiver equipment fails and its forward link transponder assignments are lost, the correct forward link assignments from the piece of communications equipment is transferred to a piece of receiver equipment of the mobile platform.

If both the receiver equipment and the communications equipment of the mobile platform are simultaneously being replaced, the mobile platform then reverts to the default transponder assignment table for a transponder link. A default assignment is used to receive a return link from a satellite transponder such that the mobile platform can receive the correct forward link transponder assignment from the ground station in accordance with the first preferred form of the present invention.

The loading of forward link transponder assignments onto receiver equipment can either be conducted during continued operation of the mobile platform or on the ground during maintenance downtime. During operation, the receivers are loaded either through the default transponder assignment table method or the mirrored assignment method from the piece of communications equipment. Similarly, on the ground, the replacement equipment is installed and the mobile platform acquires the forward link transponder assignments either through the default transponder assignment table or from the communications equipment having mirrored forward link transponder assignments.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

The present invention will become more fully understood from the detailed description and the accompanying drawings, wherein:

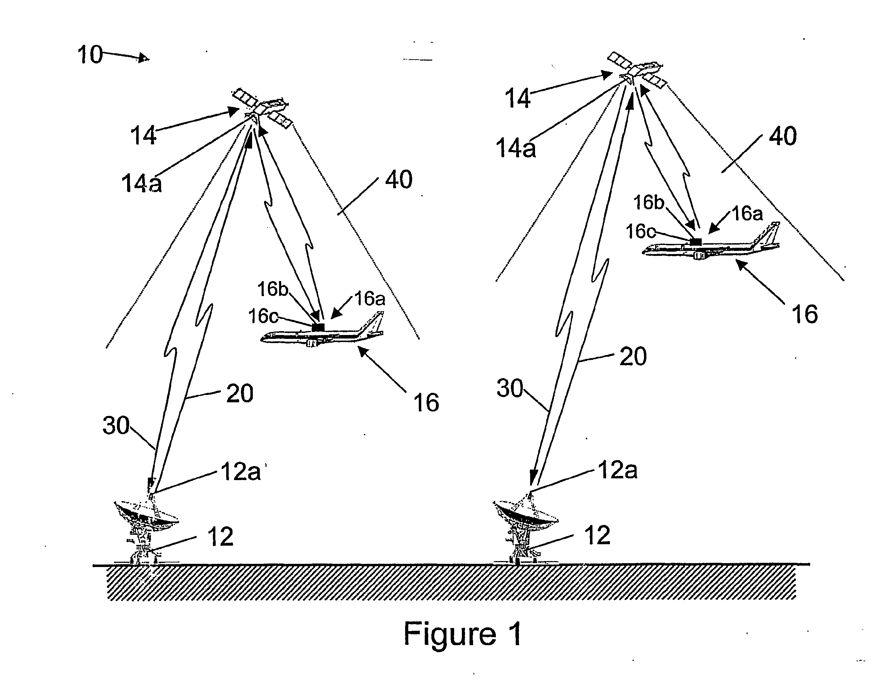

Figure 1 is a simplified block diagram illustrating bi-directional communication amongst the ground stations, the mobile platforms, and the satellites of the present invention.

The following description of the preferred embodiments is merely exemplary in nature and is in no way intended to limit the invention, its application, or uses.

Referring to Figure 1, the preferred embodiment of the communications system of the present invention is illustrated and generally indicated by reference numeral 10. The communications system 10 comprises a ground station 12 in communication with a satellite 14, which in turn is in communication with a mobile platform 16. As shown, there may exist a plurality of ground stations 12, satellites 14, and mobile platforms 16 around the world for continuous data communications regardless of geographic location.

Although the present invention is directed to a communications system wherein the mobile platform is an aircraft, the invention is also applicable to other mobile platforms such as ships, trains, buses, and others. Accordingly, the reference to aircraft throughout the description of the invention herein should not be construed as limiting the applicability of the invention to only aircraft.

Generally, data or services such as command and control, telemetry, unicast (Internet), multicast (video, audio), and others are transmitted from an antenna 12a of the ground station 12 to transponders 14a of the satellite 14. The satellite transponders 14a, in turn, transmit the data to a mobile terminal 16a positioned in strategic locations on the mobile platform 16. Mobile terminal 16a comprises a plurality of receivers 16b and transmitters 16c with suitable control electronics to transmit and receive signals to and from satellite transponders 14a. Since each transponder 14a may be used to transmit different types of services, i.e. one for video and another for audio, the receivers 16b must be tuned to a specific transponder 14a or set of transponders to receive the required data or service.

The mobile platform 16 receives instructions on which specific transponder to tune from the ground station 12 in the form of forward link transponder assignments. Generally, the mobile platform 16 communicates to the ground station 12, through satellite transponders 14a, the type of data required, e.g. unicast data. Transmitters 16c transmit a signal to satellite transponders 14a, which in turn transmit the signal to the ground station 12. The ground station 12 then sends a forward link transponder assignment for the unicast transponder to the satellite transponders 14a, which in turn transmit the signal to the receivers 16b.

The ground station 12 comprises a master transponder assignment list that contains a prioritized listing of all transponders on all satellites for all regions around the world. From this master transponder assignment list, the correct forward link transponder assignments for a given mobile platform 16 are transmitted from the ground station 12 to the mobile platform 16 through a forward link 20 to the satellite 14. The satellite transponders 14a then transmit the forward link transponder assignments to the mobile platform 16. The correct list of assignments is then utilized by the mobile platform 16 to tune its receivers 16b to the correct transponders 14a for the required data communications during flight.

The communications system of the present invention further requires that the mobile platform 16 receive a return link assignment from a transponder 14a before a forward link transponder assignment can be transmitted. The return link is required so that any changes requested by the mobile platform 16 can be confirmed through a return link 30 before the ground station 12 sends another forward link transponder assignment. Even if the mobile platform 16 is linked to only a single transponder 14a, a return link assignment can still be received. As a result, a return link can be opened when at least one transponder 14a is in communication with the mobile platform 16.

Additionally, the satellites 14 may comprise several sets of transponders where each set of transponders is used for a particular set of data or services. For example, a single set of transponders may be used for command and control data while another set of transponders on the same satellite may be used for multicast (video, audio) data. Each set of transponders is then assigned a priority by the ground station 12 depending on the data or services critical to the mobile platform 16. For instance, command and control data would be a higher priority for the mobile platform 16 than multicast data, and thus the set of transponders transmitting command and control data would have a higher priority than those transmitting multicast data. Accordingly, all of the transponder sets are assigned a priority from highest to lowest, and any number of transponder sets may exist on any one satellite 14. Similarly, the plurality of satellites 14 are also given a priority from highest to lowest, again, depending on the data or services critical to the mobile platform 16.

In operation, the mobile platform 16 powers up and receives its location from an on-board navigation system. After acquiring its location, the mobile platform 16 locates a satellite 14 within its footprint 40 and subsequently directs its receivers 16b to that particular satellite 14. One the receivers 16b are locked onto at least one transponder 14a, a return link is transmitted from the transponder 14a to the receiver 16b such that mobile platform 16 can communicate with the ground station 12 for the correct forward link transponder assignments. Once the forward link transponder assignments are received by the mobile platform 16, the receivers 16b are accordingly tuned to the highest priority transponders 14a.

If a single receiver 16b fails during flight, one of the remaining receivers may be re-tuned to include the transponder to which the failed receiver 16b was tuned. If the receiver is able to lock onto the transponder, the receiver are assigned to the next lower priority set of transponders 14a. If the receiver is still unable to lock onto a transponder in the set having the required type of data or service, the next lower priority set of transponders are assigned. The remaining receivers continue progressing through each lower set of transponders until the transponder signal is locked on. If the remaining receivers cannot obtain a signal from any of the transponders on a single satellite, then the next lower priority satellite and its set of transponders are queried for the required transponder signal. Through this full search method, the mobile platform 16 can further maintain a level of communication even in the event of an entire satellite failure.

If new receiver equipment is installed or is present on-board the aircraft to overcome any receiver equipment failure, the new equipment is typically not loaded with the forward link transponder assignments for the specific mobile platform onto which it is installed. In order to avoid the operations associated with manual loading of the assignments, the communications system of the present invention loads forward link transponder assignments onto receiver equipment directly from the ground station 12 through the forward link 20. The new equipment is first loaded with a default transponder assignment table, which contains assignments to transponders that are not necessarily the required transponders for the particular mobile platform 16. The mobile platform 16 recognizes that the default transponder assignment table is incorrect, however, the default assignments are used to acquire the required return link assignment from the transponders 14a to open a return link to the ground station 12 where the master forward link transponder assignments are stored.

As set forth, the communications system of the present invention requires a return link to the ground station in order to confirm changes, and therefore, no forward link transponder assignments can be transferred until a return link is established. Once a return link is established, the mobile platform 16 is able to receive the correct forward link transponder assignments from the ground station 12 for the required set of data or services. In this manner, the forward link transponder assignments are acquired during operation of the mobile platform rather than during maintenance downtime. As a result, the data or services provided during flight are more readily available and overall maintenance costs are reduced.

In another preferred form, the communications system of the present invention transfers forward link transponder assignments from a piece of communications equipment to a piece of receiver equipment on the same mobile platform in the event of receiver equipment failure. Initially, the correct forward link transponder assignments for mobile platform 16 are mirrored onto a piece of communications equipment located on the mobile platform. When new receiver equipment of mobile platform 16 is installed or present, the piece of communications equipment transmits the forward link transponder assignments to the new receiver equipment. As a result, the mobile platform 16 acquires the correct forward link transponder assignments without necessarily communicating through the ground station 12.

If both the receiver equipment and the communications equipment of the mobile platform are simultaneously down or are being replaced, the mobile platform 16 acquires its forward link transponder assignments using the default transponder assignment table method as previously described.

The description of the invention is merely exemplary in nature and, thus, variations that do not depart from the gist of the invention are intended to be within the scope of the invention. Such variations are not to be regarded as a departure from the scope of the invention.

## Claims

1. A system (10) for transmitting forward link transponder assignments to a mobile platform (16) comprising:
at least one receiver (16b) on the mobile platform (16);
at least one transmitter (16c) on the mobile platform (16);
at least one transponder (14a) in communication with the receiver (16b);
at least one ground station (12) in communication with the receiver (16b);
**characterized by:**
the transponder (14a) comprising return link assignments;
the ground station (12) comprising a master forward link transponder assignment list; and
a default transponder assignment table loaded on the receiver (16b), the default transponder assignment table comprising a default forward link transponder assignment table,
wherein when the transmitter (16c) transmits a signal to the transponder (14a) based on the default transponder assignment table, the transponder (14a) transmits the return link assignment to the receiver (16b), and the transmitter (16c) transmits a signal to the ground station (12) via the transponder (14a) such that the ground station (12) transmits a correct forward link assignment via the transponder (14a) to the receiver (16b).

2. The system (10) of Claim 1, wherein the transponder (14a) is on a satellite (14).

3. The system (10) of Claim 2, wherein the master forward link transponder assignment list comprises a plurality of transponders (14a) on a plurality of satellites (14) for a plurality of regions around the world.

4. The system (10) of Claim 3, wherein the ground station (12) communicates with the receiver (16b) through a forward link (20) from the ground station (12) to the satellite (14), such that the transponder (14a) transmits the correct forward link transponder assignment to the mobile platform (16).

5. The system (10) of Claim 3, wherein the plurality of transponders (14a) are prioritized by the ground station (12) such that the receiver (16b) can be tuned to another transponder (14a) in the event of a transponder (14a) failure.

6. The system (10) of Claim 3, wherein the plurality of satellites (14) are prioritized by the ground station (12) such that the receiver (16b) can be tuned to a transponder (14a) on another satellite (14) in the event of a satellite failure.

7. The system (10) of any of claims 1-6 further comprising:
at least one piece of communications equipment on the mobile platform (16),
wherein the piece of communications equipment transmits forward link transponder assignments to the piece of receiver equipment (16b) when the piece of receiver equipment (16b) loses at least one forward link assignment.

8. The system (10) of Claim 7, wherein:
the ground station (12) is in communication with the mobile platform (16) via the transponder (14a),
the default transponder assignment table is loaded on the piece of communications equipment,
wherein when the piece of receiver equipment (16b) is inoperable, the piece of communications equipment transmits a signal to the transponder (14a) based on the default transponder assignment table, the transponder (14a) transmits a return link assignment to the piece of communications equipment, and the mobile platform (16) transmits a signal to the ground station (12) via the transponder (14a) such that the ground station (12) transmits a correct forward link assignment via the transponder (14a) to the piece of communications equipment.

9. A method of transmitting forward link transponder assignments to a mobile platform (16) comprising the steps of:
(a) loading a default forward link transponder assignment table onto a receiver (16b) of a mobile terminal (16a) of the mobile platform (16);
(b) transmitting a signal from a transmitter (16c) of the mobile terminal (16a) to at least one transponder (14a) listed in the default transponder assignment table;
(c) transmitting a return link assignment from the at least one transponder (14a) to the receiver (16b) of the mobile terminal (16a);
(d) transmitting a signal from the transmitter (16c) to a ground station (12) via the transponder (14a) requesting correct forward link transponder assignments;
(e) transmitting the correct forward link transponder assignments from the ground station (12) via the transponder (14a) to the receiver (16b); and
(f) retuning the receiver (16b) to the correct transponders (14a) based on the correct forward link transponder assignments.

10. The method of Claim 9, wherein the step of transmitting the correct forward link transponder assignment is accomplished through a forward link (20) from the ground station (12) to the satellite (14), such that the transponder (14a) transmits the correct forward link transponder assignment to the mobile platform (16).

11. The method of claim 9 or 10, further comprising the steps of:
(a) loading forward link transponder assignments onto a piece of communications equipment of the mobile platform (16);
(b) transmitting a signal from the piece of communications equipment to a piece of receiver equipment (16b), wherein the signal comprises forward link transponder assignments.

## Patentansprüche

1. System (10) zur Übertragung von Vorwärtsverbindungs-Transponderzuweisungen an eine mobile Plattform (16), das umfasst:
zumindest einen Empfänger (16b) auf der mobilen Plattform (16);
zumindest einen Sender (16c) auf der mobilen Plattform (16);
zumindest einen Transponder (14a) in Kommunikation mit dem Empfänger (16b);
zumindest eine Bodenstation (12) in Kommunikation mit dem Empfänger (16b);
**dadurch gekennzeichnet, dass:**
der Transponder (14a) Rückverbindungszuweisungen umfasst;
die Bodenstation (12) eine Haupt-Vorwärtsverbindungs-Transponderzuweisungs-Liste umfasst; und
eine Standard-Transponderzuweisungs-Tabelle auf den Empfänger (16b) geladen wird, wobei die Standard-Transponderzuweisungs-Tabelle eine Standard-Vorwärtsverbindungs-Transponderzuweisungs-Tabelle umfasst,
wobei, wenn der Sender (16c) ein Signal an den Transponder (14a) auf Grundlage der Standard-Transponderzuweisungs-Tabelle sendet, der Transponder (14a) die Rückverbindungszuweisung an den Empfänger (16b) sendet, und der Sender (16c) ein Signal an die Bodenstation (12) via den Transponder (14a) sendet, so dass die Bodenstation (12) eine korrekte Vorwärtsverbindungszuweisung via den Transponder (14a) an den Empfänger (16b) sendet.

2. System (10) nach Anspruch 1, wobei sich der Transponder (14a) auf einem Satelliten (14) befindet.

3. System (10) nach Anspruch 2, wobei die Haupt-Vorwärtsverbindungs-Transponderzuweisungs-Liste eine Mehrzahl von Transpondern (14a) auf einer Mehrzahl von Satelliten (14) für eine Mehrzahl von Regionen rund um die Welt umfasst.

4. System (10) nach Anspruch 3, wobei die Bodenstation (12) mit dem Empfänger (16b) durch eine Vorwärtsverbindung (20) von der Bodenstation (12) zum Satelliten (14) kommuniziert, so dass der Transponder (14a) die korrekte Vorwärtsverbindungs-Transponderzuweisung an die mobile Plattform (16) sendet.

5. System (10) nach Anspruch 3, wobei die Mehrzahl von Transpondern (14a) von der Bodenstation (12) nach Vorrangigkeit geordnet wird, so dass der Empfänger (16b), im Falle des Ausfalls eines Transponders (14a), auf einen anderen Transponder (14a) eingestellt werden kann.

6. System (10) nach Anspruch 3, wobei die Mehrzahl von Satelliten (14) von der Bodenstation (12) nach Vorrangigkeit geordnet wird, so dass der Empfänger (16b), im Falle des Ausfalls eines Satelliten, auf einen Transponder (14a) auf einem anderen Satelliten (14) eingestellt werden kann.

7. System (10) nach einem der Ansprüche 1 - 6, das weiterhin umfasst:
zumindest ein Kommunikationsausrüstungsteil auf der mobilen Plattform (16),
wobei das Kommunikationsausrüstungsteil Vorwärtsverbindungs-Transponderzuweisungen an das Empfängerausrüstungsteil (16b) sendet, wenn das Empfängerausrüstungsteil (16b) zumindest eine Vorwärtsverbindungszuweisung verliert.

8. System (10) nach Anspruch 7, wobei:
die Bodenstation (12) in Kommunikation mit der mobilen Plattform (16) via den Transponder (14a) ist,
die Standard-Transponderzuweisungs-Tabelle auf das Kommunikationsausrüstungsteil geladen wird,
wobei, wenn das Empfängerausrüstungsteil (16b) nicht betreibbar ist, das Kommunikationsausrüstungsteil ein Signal an den Transponder (14a) sendet auf Grundlage der Standard-Transponderzuweisungs-Tabelle, wobei der Transponder (14a) eine Rückverbindungszuweisung an das Kommunikationsausrüstungsteil sendet, und die mobile Plattform (16) ein Signal an die Bodenstation (12) via den Transponder (14a) sendet, so dass die Bodenstation (12) eine korrekte Vorwärtsverbindungszuweisung via den Transponder (14a) an das Kommunikationsausrüstungsteil sendet.

9. Verfahren zur Übertragung von Vorwärtsverbindungs-Transponderzuweisungen an eine mobile Plattform (16), das die Schritte umfasst:
(a) Laden einer Standard-Vorwärtsverbindungs-Transponderzuweisungs-Tabelle auf einen Empfänger (16b) eines mobilen Endgeräts (16a) der mobilen Plattform (16);
(b) Senden eines Signals von einem Sender (16c) des mobilen Endgeräts (16a) an zumindest einen Transponder (14a), der in der Standard-Transponderzuweisungs-Tabelle aufgelistet ist;
(c) Senden einer Rückverbindungszuweisung vom zumindest einen Transponder (14a) zum Empfänger (16b) des mobilen Endgeräts (16a);
(d) Senden eines Signals vom Sender (16c) zu einer Bodenstation (12) via den Transponder (14a), mit Anforderung korrekter Vorwärtsverbindungs-Transponderzuweisungen;
(e) Senden der korrekten Vorwärtsverbindungs-Transponderzuweisungen von der Bodenstation (12) via den Transponder (14a) zum Empfänger (16b); und
(f) erneutes Einstellen des Empfängers (16b) auf die korrekten Transponder (14a) auf Grundlage der korrekten Vorwärtsverbindungs-Transponderzuweisungen.

10. Verfahren nach Anspruch 9, wobei der Schritt des Sendens der korrekten Vorwärtsverbindungs-Transponderzuweisung bewerkstelligt wird durch eine Vorwärtsverbindung (20) von der Bodenstation (12) zum Satelliten (14), so dass der Transponder (14a) die korrekte Vorwärtsverbindungs-Transponderzuweisung an die mobile Plattform (16) sendet.

11. Verfahren nach Anspruch 9 oder 10, das weiterhin die Schritte umfasst:
(a) Laden von Vorwärtsverbindungs-Transponderzuweisungen auf ein Kommunikationsausrüstungsteil der mobilen Plattform (16);
(b) Senden eines Signals vom Kommunikationsausrüstungsteil zu einem Empfängerausrüstungsteil (16b), wobei das Signal Vorwärtsverbindungs-Transponderzuweisungen umfasst.

## Revendications

1. Système (10) de transmission d'assignations de répéteur en liaison aller auprès d'une plate-forme mobile (16) comprenant :
au moins un récepteur (16b) situé sur la plate-forme mobile(16) ;
au moins un émetteur (16c) situé sur la plate-forme mobile(16) ;
au moins un répéteur (14a) en communication avec le récepteur (16b) ;
au moins une station au sol (12) en communication avec le récepteur (16b) ;
**caractérisé en ce que :**
le répéteur (14a) comprend des assignations en liaison retour ;
la station au sol (12) comprend une liste d'assignations de répéteur en liaison aller de référence ; et
un tableau d'assignation de répéteur par défaut chargé sur le récepteur (16b), le tableau d'assignation de répéteur par défaut comprenant un tableau d'assignations de répéteur en liaison aller par défaut,
dans lequel, lorsque l'émetteur (16c) émet un signal à destination du répéteur (14a) fondé sur le tableau d'assignation de répéteur par défaut, le répéteur (14a) émet l'assignation en liaison retour à destination du récepteur (16b), et l'émetteur (16c) émet un signal à destination de la station au sol (12) via le répéteur (14a) de sorte que la station au sol (12) émette une assignation en liaison aller correcte via le répéteur (14a) à destination du récepteur (16b).

2. Système (10) selon la revendication 1, dans lequel le répéteur (14a) est situé sur un satellite (14).

3. Système (10) selon la revendication 2, dans lequel la liste d'assignations de répéteur en liaison aller de référence comprend une pluralité de répéteurs (14a) situés sur une pluralité de satellites (14) pour une pluralité de régions du monde.

4. Système (10) selon la revendication 3, dans lequel la station au sol (12) communique avec le récepteur (16b) par le biais d'une liaison aller (20) depuis la station au sol (12) en direction du satellite (14), de sorte que le répéteur (14a) émette l'assignation de répéteur en liaison aller correcte à destination de la plate-forme mobile (16).

5. Système (10) selon la revendication 3, dans lequel la pluralité de répéteurs (14a) est hiérarchisée par la station au sol (12) de sorte que le récepteur (16b) puisse être accordé sur un autre répéteur (14a) dans l'éventualité d'une défaillance d'un répéteur (14a).

6. Système (10) selon la revendication 3, dans lequel la pluralité de satellites (14) est hiérarchisée par la station au sol (12) de sorte que le récepteur (16b) puisse être accordé sur un répéteur (14a) d'un autre satellite (14) dans l'éventualité d'une défaillance du satellite.

7. Système (10) selon l'une quelconque des revendications 1 à 6, comprenant en outre :
au moins un appareil de communication situé sur la plate-forme mobile (16),
l'appareil de communication 30 émettant des assignations de répéteur en liaison aller à destination de l'appareil récepteur (16b) lorsque l'appareil récepteur (16b) perd au moins une assignation en liaison aller.

8. Système (10) selon la revendication 7, dans lequel :
la station au sol (12) est en communication avec la plate-forme mobile (16) via le répéteur (14a),
le tableau d'assignation de répéteur par défaut est chargé sur l'appareil de communication,
l'appareil de communication émettant, lorsque l'appareil récepteur (16b) est inopérant, un signal à destination du répéteur (14a) en se fondant sur le tableau d'assignation de répéteur par défaut, le répéteur (14a) émettant une assignation en liaison retour à destination de l'appareil de communication, et la plate-forme mobile (16) émettant un signal à destination de la station au sol (12) via le répéteur (14a) de sorte que la station au sol (12) émette une assignation en liaison aller correcte via le répéteur (14a) à destination de l'appareil de communication.

9. Procédé de transmission d'assignations de répéteur en liaison aller auprès d'une plate-forme mobile (16) comprenant les étapes consistant à :
(a) charger un tableau d'assignations de répéteur en liaison aller par défaut sur un récepteur (16b) d'un terminal mobile (16a) de la plate-forme mobile (16) ;
(b) émettre un signal issu d'un émetteur (16c) du terminal mobile (16a) à destination d'au moins un répéteur (14a) figurant dans le tableau d'assignation de répéteur par défaut ;
(c) émettre une assignation en liaison retour issue de l'au moins un répéteur (14a) à destination du récepteur (16b) du terminal mobile (16a) ;
(d) émettre un signal issu de l'émetteur (16c) à destination d'une station au sol (12) via le répéteur (14a) demandant les assignations de répéteur en liaison aller correctes ;
(e) émettre les assignations de répéteur en liaison aller correctes issues de la station au sol (12) via le répéteur (14a) à destination du récepteur (16b) ; et
(f) faire revenir le récepteur (16b) aux répéteurs (14a) corrects en se fondant sur les assignations de répéteur en liaison aller correctes.

10. Procédé selon la revendication 9, dans lequel l'étape d'émission de l'assignation de répéteur en liaison aller correcte s'effectue par une liaison aller (20) depuis la station au sol (12) à destination du satellite (14), de sorte que le répéteur (14a) émette l'assignation de répéteur en liaison aller correcte à destination de la plate-forme mobile (16).

11. Procédé selon la revendication 9 ou 10, comprenant en outre les étapes consistant à :
(a) charger les assignations de répéteur en liaison aller sur un appareil de communication de la plate-forme mobile (16) ;
(b) émettre un signal issu de l'appareil de communication à destination d'un appareil récepteur (16b), dans lequel le signal comprend les assignations de répéteur en liaison aller.
